(19) **Europäisches Patentamt**

**European Patent Office**

**Office européen des brevets**

(11) **EP 0 928 374 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(51) Int Cl.⁷: **F16D 48/06**, B60K 41/02
// (F16D109/04, 103:00, 105:00)

(21) Anmeldenummer: **97909172.5**

(22) Anmeldetag: **18.09.1997**

(86) Internationale Anmeldenummer:
**PCT/DE97/02146**

(87) Internationale Veröffentlichungsnummer:
**WO 98/013617 (02.04.1998 Gazette 1998/13)**

(54) **AUTOMATISCH GESTEUERTE KUPPLUNG**

AUTOMATIC CLUTCH

EMBRAYAGE A COMMANDE AUTOMATIQUE

(84) Benannte Vertragsstaaten:
**DE ES FR GB IT**

(30) Priorität: **25.09.1996 DE 19639377**

(43) Veröffentlichungstag der Anmeldung:
**14.07.1999 Patentblatt 1999/28**

(73) Patentinhaber:
• **LUK Getriebe-Systeme GmbH**
**77815 Bühl (DE)**
• **DaimlerChrysler AG**
**70567 Stuttgart (DE)**

(72) Erfinder:
• **KOSIK, Franz**
**D-73760 Ostfildern (DE)**
• **GRASS, Thomas**
**D-73660 Urbach (DE)**
• **SALECKER, Michael**
**D-70597 Stttgart (DE)**

(74) Vertreter: **Patentanwalts-Partnerschaft,**
**Rotermund + Pfusch + Bernard**
**Waiblinger Strasse 11**
**70372 Stuttgart (DE)**

(56) Entgegenhaltungen:
**EP-A- 0 759 513**      **WO-A-89/03318**
**US-A- 4 805 750**

**Beschreibung**

Die Erfindung betrifft eine automatisch gesteuerte Kupplung im Antriebstrang eines Kraftfahrzeuges, welches ein zwischen Motor und Antriebsrädern angeordnetes, willkürlich zwischen Gängen bzw. Fahrstufen mit unterschiedlichen Übersetzungen schaltbares Getriebe aufweist, mit einem die Kupplung betätigenden motorischen Stellaggregat, welches von einer Sensorik gesteuert wird, die vorgegebene Parameter erfaßt, wobei die Sensorik einerseits mit dem Drehmoment des Motors und andererseits mit dem übertragbaren Moment der Kupplung korrelierte Parameter erfaßt und die Kupplung beim Fahrbetrieb mit parameterabhängiger Überanpressung steuert.

Bei Kraftfahrzeugen mit üblichen Verbrennungsmotoren wird im Antriebstrang ein Getriebe benötigt, um das Übersetzungsverhältnis zwischen der Drehzahl des Fahrzeugmotors und der Drehzahl der Antriebsräder entsprechend der jeweiligen Fahrgeschwindigkeit und Belastung des Fahrzeuges ändern zu können. Bei üblichen, vom Fahrer geschalteten Getrieben muß während des Wechsels der Fahrstufen bzw. Gänge der Kraftfluß zwischen Motor und Antriebsrädern durch Öffnen einer Kupplung unterbrochen werden.

Hierzu werden bereits serienmäßig automatisch gesteuerte Kupplungen eingesetzt, d.h. die Kupplung wird beim Gang- bzw.

Fahrstufenwechsel automatisch geöffnet und nachfolgend wieder geschlossen.

Darüber hinaus wird die Kupplung auch beim Anfahren des Fahrzeuges automatisch gesteuert. Wenn eine zum Anfahren geeignete Fahrstufe eingelegt wird, kann die Kupplung beispielsweise automatisch schwach geschlossen werden, derart, daß ein sehr geringes Drehmoment übertragen wird, welches ausreicht, das Fahrzeug langsam kriechend in Bewegung zu setzen. Sobald die Motorleistung und die Motordrehzahl durch Betätigung eines Fahrpedales od.dgl. erhöht wird, wird die Kupplung automatisch zunehmend geschlossen, um das übertragbare Drehmoment zu erhöhen.

Diese bekannten automatischen Kupplungen arbeiten nach Art von Reibkupplungen, deren Reibschluß vom zugeordneten Stellaggregat der Kupplung gesteuert wird. Dabei arbeitet das Stellaggregat gegen eine die Kupplung schließend beaufschlagende Federanordnung, d.h. das Stellaggregat muß eine mehr oder weniger große Gegenkraft gegen die Federanordnung erzeugen, wenn der Reibschluß bzw. das übertragbare Moment der Kupplung vermindert werden sollen. Bei maximalem Reibschluß bzw. bei maximalem übertragbaren Moment der Kupplung kann das Stellaggregat völlig kraftlos sein. Bei Verminderung des Reibschlusses bzw. des übertragbaren Momentes der Kupplung muß das Stellaggregat außerdem einen mehr oder weniger großen Stellhub ausführen. Im Zustand des maximalen Reibschlusses bzw. maximalen übertragbaren Momentes der Kupplung nimmt das Stellaggregat eine Endlage ein.

Aus der DE-OS 1 505 469 ist eine elektromagnetisch betätigte Kupplung der eingangs angegebenen Art bekannt.

Die WO 89/03318 zeigt ein Kraftfahrzeug mit Doppelkupplungsgetriebe, d.h. das Getriebe zwischen Motor und Antriebsrädern besitzt zwei parallele Getriebezweige, die jeweils separat durch Schließen jeweils einer Kupplung eines Doppelkupplungsaggregates zur Kraftübertragung wirksam werden, wobei das übertragbare Kupplungsmoment in Abhängigkeit von der Motordrehzahl bzw. dem Motormoment gesteuert werden kann.

Aufgabe der Erfindung ist es nun, eine besonders vorteilhafte Steuerung für die automatische Kupplung aufzuzeigen.

Diese Aufgabe wird erfindungsgemäß dadurch gelöst, daß das übertragbare Kupplungsmoment bei Gängen bzw. Fahrstufen mit hohem Übersetzungsverhältnis zwischen Motordrehzahl und Drehzahl der Antriebsräder und/oder bei geringer Fahrgeschwindigkeit das jeweilige Motormoment um ein geringeres Maß überschreitet als bei Gängen bzw. Fahrstufen mit geringerem Übersetzungsverhältnis und/oder bei höherer Fahrgeschwindigkeit.

Die Erfindung beruht auf dem allgemeinen Gedanken, das von der Kupplung übertragbare Moment analog zum jeweils vom Motor erzeugten Drehmoment zu steuern und dabei in Anpassung an die jeweiligen Betriebsverhältnisse des Fahrzeuges mit veränderbarer Überanpressung der Kupplung zu arbeiten, d.h. das von der Kupplung übertragbare Moment übersteigt das jeweils vom Motor erzeugte Drehmoment um ein veränderliches Maß. Hierbei ist vorgesehen, die Überanpressung deutlich zurückzunehmen, wenn die Gefahr bzw. Wahrscheinlichkeit von Stößen im Antriebstrang - z.B. Lastwechselstöße - besonders große ist, beispielsweise bei geringer Fahrgeschwindigkeit und/oder Fahrt in niedrigen Gängen bzw. Fahrstufen mit hoher Übersetzung zwischen Motordrehzahl und Drehzahl der Antriebsräder. Damit wird gleichzeitig der Tatsache Rechnung getragen, daß in derartigen Fahrsituationen Gang- bzw. Fahrstufenwechsel vergleichsweise häufig vorgenommen werden. Aufgrund der geringen Überanpressung kann das Stellaggregat die Kupplung besonders schnell öffnen, denn ein Zustand mit geringer Überanpressung ist gleichbedeutend damit, daß das Stellaggregat um einen mehr oder weniger großen Stellhub von seiner Endlage, die bei maximal übertragbarem Moment der Kupplung eingenommen wird, beabstandet ist.

Wenn das Getriebe in eine Fahrstufe bzw. in einen Gang geschaltet ist, bei dem ein geringes Übersetzungsverhältnis zwischen Motordrehzahl und Drehzahl der Antriehsräder vorliegt, bzw. bei Fahrsituationen mit hoher Geschwindigkeit kann dagegen erfindungsgemäß die Überanpressung bis auf das von der Kupplung maximal übertragbare Moment erhöht werden. Bei solchen Betriebsphasen ist mit nennenswerten Stößen im Antriebstrang kaum zu rechnen. Es besteht daher kein Erfordernis, das Kupplungsmoment bzw. den Reibschluß der Kupplung auf ein Maß zu verringern, bei dem die Kupplung im Falle derartiger Stöße zu deren Dämpfung kurzzeitig mit Schlupf arbeiten, d.h. durchrutschen, kann. Durch Einstellung des maximalen übertragbaren Momentes bzw. Reibschlusses der Kupplung wird das Stellaggregat in wünschenswerter Weise entlastet, insbesondere bei längeren Fahrten auf Schnellstraßen kann dadurch das Stellaggregat deutlich geschont werden.

Im übrigen wird hinsichtlich bevorzugter Merkmale der Erfindung auf die Ansprüche sowie die nachfolgende Erläuterung der Zeichnung verwiesen, anhand der besonders vorzugte Ausführungsformen der Erfindung beschrieben werden.

Dabei zeigt

Fig. 1 eine schematisierte Darstellung eines Antriebstranges eines Kraftfahrzeuges sowie der für die erfindungsgemäße Kupplungssteuerung wesentlichen Komponenten und

Fig. 2 eine schematisierte Darstellung einer hydraulisch betätigten Kupplung.

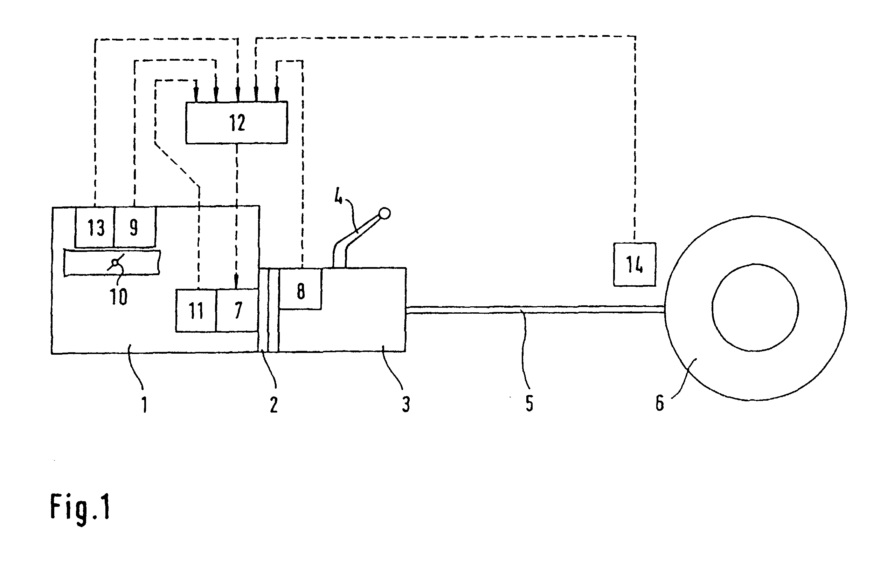

Gemäß Fig. 1 ist ein Verbrennungsmotor 1 über eine automatisch betätigte Kupplung 2 mit einem Getriebe 3, dessen Fahrstufen bzw. Gänge durch manuelle Betätigung eines Schalthebels 4 gewechselt werden, und eine Antriebswelle 5, z.B. eine Kardanwelle, mit Antriebsrädern 6 eines im übrigen nicht näher dargestellten Kraftfahrzeuges antriebsmäßig verbunden.

Die Betätigung der Kupplung 2 erfolgt automatisch mittels eines motorischen Stellaggregates 7, zu dessen Steuerung eine Sensorik zur Überwachung verschiedener Parameter des Fahrbetriebes vorgesehen ist.

Diese Sensorik umfaßt eine Sensoranordnung 8, welche dem Getriebe 3 bzw. dem Schalthebel 4 zugeordnet ist und dessen Stellungen sowie Bewegungen erfaßt und damit die jeweils eingelegte Fahrstufe bzw. den jeweils eingelegten Gang kennt bzw. eine Schaltabsicht des Fahrers, bei der der jeweils eingelegte Gang bzw. die jeweils eingelegte Fahrstufe verlasssen werden, registriert.

Durch einen Sensor 9 wird die Stellung eines zur Leistungssteuerung des Motors 1 dienenden, fahrerseitig betätigten Organs registriert, beispielsweise einer Drosselklappe 10 des Luftansaugsystems des Motors 1.

Des weiteren umfaßt die Sensorik einen Weggeber 11, welcher dem Stellaggregat 7 zugeordnet ist und dessen Stellung und damit einen Parameter erfaßt, welcher zur Größe des von der automatischen Kupplung übertragbaren Momentes analog ist.

Außerdem kommuniziert die Steuerschaltung 12 mit einer Motorsteuerung 13, welche unter anderem die Aufgabe hat, die Motordrehzahl weitestgehend unabhängig von der Belastung des Motors auf einer Mindestdrehzahl, etwa der Leerlaufdrehzahl, zu halten. Diese Motorsteuerung 13 erzeugt darüber hinaus Signale, die die jeweilige Drehzahl des Motors 1 sowie das jeweils vom Motor 1 erzeugte Drehmoment wiedergeben.

Im übrigen kommuniziert die Steuerschaltung 12 mit Drehzahlgebern 14, welche den Antriebsrädern 6 zugeordnet sind.

Aufgrund des Informationsaustausches mit der Motorsteuerung 13 kann die Steuerschaltung 12 das jeweils von der Kupplung 2 tatsächlich übertragene Moment ermitteln. Wenn das von der Motorsteuerung 13 ermittelte Drehmoment des Motors mit $M_M$, das durch die Konstruktion des Motors 1 vorgegebene Trägheitsmoment des Motors 1 mit $J_M$ und die von der Motorsteuerung 13 gemeldeten zeitlichen Drehzahländerungen des Motors mit $d\omega/dt$ bezeichnet werden, gilt für das von der Kupplung 2 tatsächlich übertragene Moment $M_K$:

$$M_K = M_M - J_m d\omega/dt.$$

Darüber hinaus kann die Steuerschaltung 12 aufgrund der Signale der Motorsteuerung 13 für die Motordrehzahl und der Signale der Drehzahlgeber 14 feststellen, ob die Kupplung 2 mit Schlupf arbeitet bzw. "schleift", d.h. ob die Drehzahlen der Eingangsseite und der Ausgangsseite der Kupplung 2 voneinander abweichen. Die Drehzahl der Eingangsseite der Kupplung wird durch die Motordrehzahl eindeutig vorgegeben. Die Drehzahl der Ausgangsseite der Kupplung wird durch die Drehzahlen der Antriebsräder 6 in Verbindung mit der eingelegten Fahrstufe bzw. mit dem eingelegten Gang des Getriebes 3, d.h. in Verbindung mit der jeweiligen Getriebeübersetzung, bestimmt. Die Fahrstufe bzw. der Gang und damit die Getriebeübersetzung werden von der Sensoranordnung 8 gemeldet.

Sollte die Kupplung mit Schlupf arbeiten, d.h. schleifen, wird die jeweilige Stellung des Stellaggregates 7 - diese Stellung wird vom Weggeber 11 erfaßt - dem jeweils von der Kupplung 2 übertragenen Moment zugeordnet, denn bei schleifender bzw. mit Schlupf arbeitender Kupplung 2 entspricht das jeweils tatsächlich von der Kupplung 2 übertragene Moment dem bei der jeweiligen Stellung des Stellaggregates 7 übertragbaren Moment.

Im Ergebnis kann also die Steuerschaltung 12 ständig einander zugeordnete Werte zwischen dem Stellhub des Stellaggregates und dem von der Kupplung 2 übertragbaren Moment ermitteln und speichern und daraus gegebenenfalls das von der Kupplung 2 übertragbare Moment für solche Stellungen des Stellaggregates 7 extrapolieren, bei denen die Kupplung ohne Schlupf arbeitet.

Erfindungsgemäß steuert die Steuerschaltung 12 das Stellaggregat 7 derart, daß die Kupplung 2 beim Fahrbetrieb mit einer mehr oder weniger großen Überanpressung arbeitet, d.h. das von der Kupplung 2 übertragbare Moment übersteigt das jeweilige Drehmoment des Motors 1 um ein vorgegebenes Maß, welches erfindungsgemäß parameterabhängig gesteuert wird.

Wenn ein niedriger Gang bzw. eine niedrige Fahrstufe eingelegt sind, d.h. zwischen der Drehzahl des Motors 1 und der Drehzahl der Antriebsräder 6 ein großes Übersetzungsverhältnis vorliegt, die Motordrehzahl also relativ zur Raddrehzahl vergleichsweise groß ist, und/oder wenn das Fahrzeug mit geringer Geschwindigkeit, die durch die Drehzahlgeber 14 erfaßt wird, fährt, wird eine nur geringe Überanpressung eingestellt. Dies hat zur Folge, daß die Kupplung 2 bei Stößen im Antriebstrang, etwa aufgrund eines starken Lastwechsels, kurzzeitig mit Schlupf arbeitet und damit stoßdämpfend wirkt. Gleichzeitig wird durch die genannte Einstellung der Kupplung 2 der Tatsache Rechnung getragen, daß bei solchen Betriebssituationen ein Wechsel der Gänge bzw. Fahrstufen vergleichsweise häufig notwendig ist und die Kupplung dementsprechend oft geöffnet werden muß. Aufgrund der geringen Überanpressung braucht das Stellaggregat 7 nur einen vergleichsweise geringen zusätzlichen Öffnungshub auszuführen.

Wenn eine hohe Fahrstufe bzw. ein hoher Gang eingelegt sind und dementsprechend eine geringe Übersetzung zwischen Motordrehzahl und Raddrehzahl vorliegt, und/oder wenn das Fahrzeug mit hoher Geschwindigkeit fährt, kann erfindungsgemäß mit maximaler Überanpressung gefahren werden, d.h. die Kupplung 2 wird auf maximales übertragbares Drehmoment eingestellt. Dies ist gleichbedeutend damit, daß die vom Stellaggregat 7 zu erzeugende Stellkraft sowie der vom Stellaggregat 7 auszuführende Stellhub verschwindende Werte annehmen, d.h. das Stellaggregat 7 nimmt eine kraftlose Endlage ein, wie weiter unten dargestellt wird.

Damit kann das Stellaggregat 7 bei längeren Fahrten auf Schnellstraßen, d.h. wenn weder nennenswerte Stöße im Antriebstrang auftreten noch Gang- bzw. Fahrstufenwechsel notwendig sind, deutlich entlastet werden.

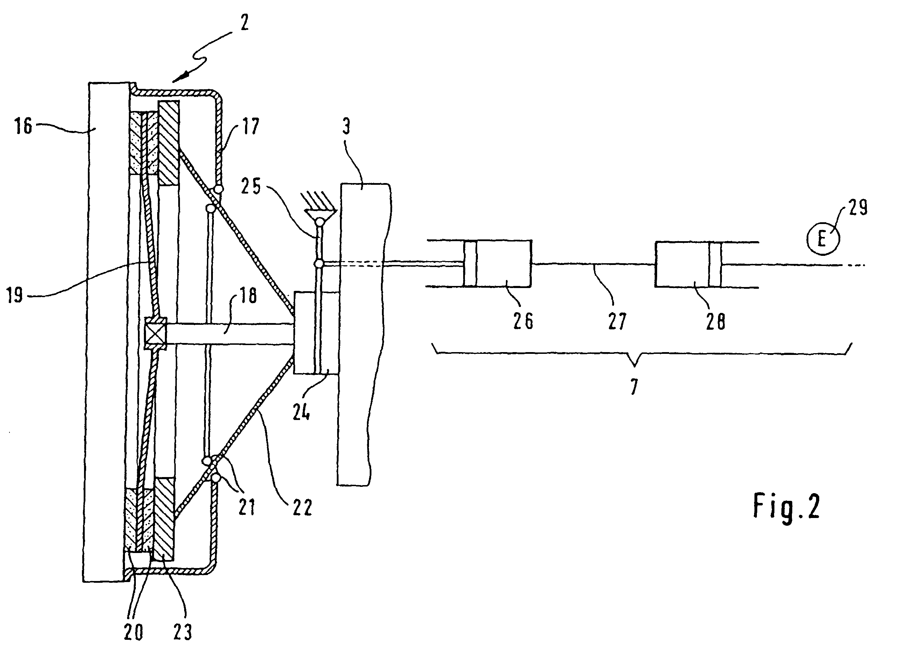

Der in Fig. 2 nicht dargestellte Motor 1 (vgl. Fig. 1) trägt auf einem Ausgangsteil seiner Kurbelwelle ein mit der Kurbelwelle drehfest verbundenes Schwungrad 16, welches fest mit einem im wesentlichen glockenförmigen, ringartigen Kupplungsgehäuse 17 verbunden ist. Gleichachsig zum Schwungrad 16 ist eine Eingangswelle 18 des Getriebes 3 angeordnet. Mit dieser Eingangswelle ist eine Mitnehmerscheibe 19 der Kupplung 2 drehfest verbunden. Diese Mitnehmerscheibe 19 ist axial nachgiebig ausgebildet, derart, daß sich Reibbeläge 20, die am Außenumfang der Mitnehmerscheibe 19 auf deren beiden Stirnseiten angeordnet sind, axial gegen das Schwungrad 16 drücken lassen. Am Kupplungsgehäuse 17 ist mittels Lagerringe 21 eine Tellerfeder 22 gehaltert, deren Konkavseite dem Schwungrad 16 zugewandt ist. Am Außenumfang trägt die Tellerfeder 22 eine ringförmige Druckplatte 23, welche in - Achsansicht gesehen - die Reibbeläge 20 der Mitnehmerscheibe 19 radial vollständig überdeckt. Am Innenumfang ist die Tellerfeder 22 drehbar an einem Ausrücklager 24 abgestützt, welches auf der Eingangswelle 18 axial verschiebbar drehgelagert ist.

Das Ausrücklager 24 wird von einer Ausrückgabel 25 erfaßt, welche einen Hebel bildet, der um eine zur Achse der Eingangswelle 18 senkrechte Schwenkachse beweglich ist. Die Ausrückgabel 25 wird mittels eines hydraulischen Nehmerzylinders 26 betätigt, der über eine Hydraulikleitung 27 mit einem hydraulischen Geberzylinder 28 kommuniziert, dessen Kolben im dargestellten Beispiel durch einen Elektromotor 29 verschiebbar ist. Dieser Elektromotor 29 bildet zusammen mit dem Nehmerzylinder 26, der Hydraulikleitung 27 und dem Geberzylinder 28 das Stellaggregat 7 der Fig. 1 und wird von der Steuerschaltung 12 der Fig. 1 betätigt.

Die dargestellte Kupplung 2 arbeitet wie folgt:

Die Tellerfeder 22 sucht das Ausrücklager 24 in eine Endlage nach rechts und die Druckplatte 23 in Fig. 2 nach links zu schieben, derart, daß die Mitnehmerscheibe 19 mit ihren Reibbelägen 20 axial zwischen den einander zugewandten Stirnseiten des Schwungrades 16 und der Druckplatte 23 eingeklemmt und ein sehr hoher Kraftschluß zwischen Schwungrad 16 und Druckplatte 23 einerseits und der Mitnehmerscheibe 19 bzw. den Reibbelägen 20 andererseits erreicht wird. Wird das Ausrücklager 24 in Richtung des Schwungrades 16 verschoben, indem der Kolben des Geberzylinders 28 mittels des Elektromotors 29 in den Geberzylinder 28 eingeschoben wird, so wird der vorgenannte Kraftschluß zunächst zunehmend vermindert. Bei weiterer Verschiebung des Ausrücklagers 24 nach links wird dann die Mitnehmerscheibe 19 mit ihren Reibbelägen 20 axial zwischen dem Schwungrad 16 und der Druckplatte 23 freigegeben, d.h. die Kupplung 2 wird vollständig geöffnet.

Wenn die Kupplung auf maximales übertragbares Moment eingestellt werden soll, braucht der Elektromotor lediglich in einen selbsthemmungsfreien Zustand gebracht zu werden, so daß die Tellerfeder 22 das Ausrücklager 24 bis in die dargestellte Endlage zurückschieben und ihren Zustand einnehmen kann, in dem sie die Druckplatte 23 mit maximaler Kraft gegen die Mitnehmerscheibe 19 und das Schwungrad 16 spannt. Gegebenenfalls kann vorgesehen sein, daß das maximale Kupplungsmoment erst nach einer gewissen Verzögerungszeit nach dem jeweils letzten Gangwechsel eingestellt wird, wenn im übrigen die obengenannten Bedingungen vorliegen.

## Patentansprüche

1. Automatisch gesteuerte Kupplung im Antriebstrang eines Kraftfahrzeuges, welches ein zwischen Motor und Antriebsrädern angeordnetes, willkürlich zwischen Gängen bzw. Fahrstufen mit unterschiedlichen Getriebeübersetzungen schaltbares Getriebe aufweist, mit einem die Kupplung betätigenden motorischen Stellaggregat, welches von einer Sensorik gesteuert wird, die vorgegebene Parameter erfaßt, wobei die Sensorik einerseits mit dem Drehmoment des Motors und andererseits mit dem übertragbaren Moment der Kupplung korrelierte Parameter erfaßt und die Kupplung beim Fahrbetrieb mit parameterabhängiger Überanpressung steuert, **dadurch gekennzeichnet, daß** das übertragbare Kupplungsmoment bei Gängen bzw. Fahrstufen mit hohem Übersetzungsverhältnis zwischen Motordrehzahl und Drehzahl der Antriebsräder (6) und/oder bei geringer Fahrgeschwindigkeit das jeweilige Motormoment um ein geringeres Maß überschreitet als bei Gängen bzw. Fahrstufen mit geringerem Übersetzungsverhältnis und/oder bei höherer Fahrgeschwindigkeit.

2. Kupplung nach Anspruch 1, **dadurch gekennzeichnet, daß** die Kupplung (2) bei Gängen bzw. Fahrstufen mit geringem Übersetzungsverhältnis zwischen Motordrehzahl und Drehzahl der Antriebsräder und/oder bei höherer Fahrgeschwindigkeit auf maximales übertragbares Moment einstellbar ist.

3. Kupplung nach Anspruch 2, **dadurch gekennzeichnet, daß** das maximale übertragbare Moment erst nach vorgegebener Verzögerungszeit nach dem jeweils letzten Gang- bzw. Fahrstufenwechsel einstellbar ist.

## Claims

1. An automatic clutch in the drive train of a motor vehicle, which has a transmission which is arranged between the engine and the drive wheels and can be shifted arbitrarily between gears or drive positions with different transmission ratios, having a motorized adjusting unit which actuates the clutch and is controlled by a system of sensors which senses predetermined parameters, the system of sensors sensing parameters correlated on the one hand with the torque of the engine and on the other hand with the transmissible moment of the clutch and controlling the clutch with parameter-dependent excess contact pressure during driving, wherein the transmissible clutch moment exceeds the respective engine torque by a smaller amount in gears or drive positions with a high transmission ratio between the engine speed and the speed of the drive wheels (6) and/or at low driving speed than in gears or drive positions with a lower transmission ratio and/or at higher driving speed.

2. The clutch as claimed in claim 1, wherein the clutch (2) can be set to the maximum transmissible moment in gears or drive positions with a low transmission ratio between the engine speed and the speed of the drive wheels and/or at relatively high travelling speed.

3. The clutch as claimed in claim 2, wherein the maximum transmissible moment can be set only after a predetermined delay time following the last gear change or change of drive position in each case.

## Revendications

1. Embrayage à commande automatique dans la ligne. d'entraînement d'un véhicule automobile, qui présente une transmission disposée entre le moteur et les roues motrices, commutable à volonté entre des vitesses respectivement rapports avec différents rapports d'engrenage, comprenant un groupe de réglage motorisé qui actionne l'embrayage et est commandé par un système de capteurs qui détecte des paramètres prédéfinis, le système de capteurs détectant des paramètres corrélés d'un côté avec le couple du moteur et de l'autre côté avec le couple transmissible de l'embrayage, et commandant l'embrayage en régime de marche avec une surpression dépendante des paramètres, **caractérisé en ce qu'**aux vitesses/rapports comportant un rapport élevé entre la vitesse de rotation du moteur et la vitesse de rotation des roues motrices (6) et/ou à une faible vitesse de marche, le couple transmissible de l'embrayage dépasse le couple du moteur dans une mesure moins élevée qu'aux vitesses/rapports comportant un rapport de transmission plus faible et/ou à une vitesse de marche supérieure.

2. Embrayage suivant la revendication 1, **caractérisé en ce que** l'embrayage (2) est réglable sur un couple maximal transmissible aux vitesses/rapports comportant un faible rapport entre la vitesse de rotation du moteur et la vitesse de rotation des roues motrices et/ou à une vitesse de marche supérieure.

3. Embrayage suivant la revendication 2, **caractérisé en ce que** le couple maximal transmissible n'est réglable qu'après un temps de retard prédéfini après le dernier changement de vitesse respectivement de rapport.

EP 0 928 374 B1

Fig.1

6

Fig.2